# EUROPÄISCHE PATENTSCHRIFT

(11) **EP 4 248 193 B1**
(45) Veröffentlichungstag und Bekanntmachung des Hinweises auf die Patenterteilung: **18.03.2026**
(21) Anmeldenummer: 21810564.1
(22) Anmeldetag: 10.11.2021
(51) Int. Cl.: G01N 21/88, G01N 21/94, G01N 21/958, G01S 7/497, G01S 17/931

(54) **VERFAHREN UND VORRICHTUNG ZUR DETEKTION VON VERUNREINIGUNGEN AUF EINEM SICHTFENSTER EINES LIDARS**
METHOD AND DEVICE FOR DETECTING IMPURITIES ON A VIEWING WINDOW OF A LIDAR
PROCÉDÉ ET DISPOSITIF DE DÉTECTION D'IMPURETÉS SUR UNE FENÊTRE DE VISUALISATION D'UN LIDAR

(30) Priorität: 18.11.2020 DE 102020130481
(43) Veröffentlichungstag der Anmeldung: 27.09.2023
(73) Patentinhaber: Mercedes-Benz Group AG, 70372 Stuttgart (DE)
(72) Erfinder: SCHARF, Andreas, 70435 Stuttgart (DE); PETER, David, 70195 Stuttgart (DE)
(74) Vertreter: Novagraaf Group
(86) Internationale Anmeldenummer: PCT/EP2021/081186
(87) Internationale Veröffentlichungsnummer: WO 2022/106271

(56) Entgegenhaltungen:
- EP-A1- 3 428 686
- WO-A1-2019/142675
- WO-A1-2020/021914
- WO-A1-2020/100892
- DE-A1- 102017 222 618
- US-A1- 2021 141 090

## Beschreibung

Die Erfindung betrifft ein Verfahren zur Detektion von Verunreinigungen auf einem Sichtfenster eines Lidars gemäß dem Oberbegriff des Anspruchs 1.

Die Erfindung betrifft weiterhin eine Vorrichtung zur Detektion von Verunreinigungen auf einem Sichtfenster eines Lidars gemäß dem Oberbegriff des Anspruchs 6.

Die Erkennung von Verschmutzungen auf einem Sichtfenster eines Lidars stellt eine Herausforderung insbesondere für automatisierte Fahrzeuge, beispielsweise Level 3 oder höher, dar. Verschmutzungen führen zu einer Degradation der Sensor-Performanz und damit zu einer Einschränkung der Sicherheit und Verfügbarkeit der genannten Systeme. Lidare sind aktive Sensoren und besitzen einen Sender, beispielsweise eine oder mehrere Laser-Dioden, und einen Empfänger, beispielsweise eine oder mehrere Avalanche-Photodioden, insbesondere Einzelphotonen- Avalanche-Dioden.

Aus der DE 10 2017 222 618 A1 ist ein Verfahren zur Erkennung von Verschmutzung bei Lidar-Systemen bekannt, welches folgende Schritte aufweist:
- gerichtete Abstrahlung elektromagnetischer Strahlung in eine Umgebung des Lidar-Systems durch eine Sendeeinheit, wobei die von der Sendeeinheit abgestrahlte elektromagnetische Strahlung durch ein Austrittsfenster, welches das Lidar-System zumindest in Abstrahlrichtung der Sendeeinheit von der Umgebung abgrenzt, in die Umgebung transmittiert wird;
- Detektion eines an einer Oberfläche des Austrittsfensters in das Lidar-System zurückgestreuten Anteils der von der Sendeeinheit abgestrahlten elektromagnetischen Strahlung durch einen Verschmutzungssensor, wobei der Verschmutzungssensor eine Einzeldiode, ein 1D-Array-Detektor oder ein 2D-Array-Oberflächendetektor zur Detektion von elektromagnetischer Strahlung ist und/oder der Verschmutzungssensor in die Empfängereinheit integriert ist;
- Feststellung einer Verschmutzung des Austrittsfensters durch Auswertung der Detektion des Verschmutzungssensors.

Aus der WO 2020/021914 A1 ist ein Verfahren zur Detektion von Verunreinigungen einer Entfernungsmessvorrichtung bekannt. Bei dem Verfahren steuert eine Belichtungssteuereinheit der eine durch reflektiertes Licht aus einer ersten Entfernung bewirkten Belichtung einer Lichtempfangseinheit, für aus einer zweiten Entfernung reflektiertes Licht erfolgt keine Belichtung der Lichtempfangseinheit. Aus einer Analyse der Lichtintensitätsdaten der Pixel der Lichtempfangseinheit wird eine Zuverlässigkeit der durch die Entfernungsmessvorrichtung bestimmten Entfernung zu einem Objekt ermittelt.

Der Erfindung liegt die Aufgabe zu Grunde, ein gegenüber dem Stand der Technik verbessertes Verfahren und eine verbesserte Vorrichtung zur Detektion von Verunreinigungen auf einem Sichtfenster eines Lidars anzugeben.

Die Aufgabe wird erfindungsgemäß gelöst durch ein Verfahren, welches die im Anspruch 1 angegebenen Merkmale aufweist, und durch eine Vorrichtung, welche die im Anspruch 6 angegebenen Merkmale aufweist.

Vorteilhafte Ausgestaltungen der Erfindung sind Gegenstand der Unteransprüche.

Vorgeschlagen wird ein Verfahren zur Detektion von Verunreinigungen auf einem Sichtfenster eines Lidars, beispielsweise einer Frontscheibe, , wobei
- mittels eines Senders des Lidars ein Laserstrahl in einen Erfassungsbereich ausgesendet wird und
- mittels eines Empfängers des Lidars in dem Erfassungsbereich vorhandenes Licht detektiert wird.

Weiter ist vorgesehen, dass
- aus dem infolge des Aussendens des Laserstrahls reflektierten und detektierten Licht ein Intensitätsbild als Grauwertbild von Intensitäten von Laserreflexionen generiert wird,
- aus ohne Aussenden eines Laserstrahls detektiertem Licht ein Hintergrundlichtbild als Grauwertbild eines Hintergrundlichts generiert wird,
- das Intensitätsbild und das Hintergrundlichtbild hinsichtlich gemeinsamer Merkmale analysiert werden und
- bei Unterschreitung einer vorgegebenen Anzahl gemeinsamer Merkmale auf eine Verunreinigung auf dem Sichtfenster geschlossen wird.

Erfindungsgemäß werden im Intensitätsbild und im Hintergrundlichtbild Kanten mittels eines Kantendetektionsalgorithmus erkannt.

Aufgrund der aktiven Beleuchtung aus dem Inneren des Sensors zeigen Intensitäten der Reflektionen gegenüber dem Hintergrundlicht eine unterschiedliche Sensitivität für Verschmutzungen des Sichtfensters, so dass eine Einschätzung der Verschmutzung möglich ist.

In einer Ausführungsform wird der Laserstrahl pulsartig ausgesendet.

In einer Ausführungsform wird das Hintergrundlichtbild kurz vor dem Aussenden des Laserstrahls ermittelt. Eine zeitlich enge Abfolge der Aufnahme des Hintergrundlichtbilds und des Intensitätsbilds ist insbesondere bei Verwendung des Verfahrens in einem Kraftfahrzeug während der Fahrt von Vorteil da so in beiden Grauwertbildern annähernd die gleiche Szene aufgenommen wird.

In einer Ausführungsform werden im Intensitätsbild und im Hintergrundlichtbild Merkmale von Gebäuden und/oder Fahrzeugen und/oder Fenstern ermittelt.

In einer Ausführungsform werden auf Basis erkannter Kanten Kantenabstände und/oder Kantenpositionen als Merkmale ermittelt.

Gemäß einem Aspekt der vorliegenden Erfindung wird eine Vorrichtung zur Detektion von Verunreinigungen auf einem Sichtfenster eines Lidars vorgeschlagen, umfassend eine Datenverarbeitungseinheit, die mit dem Lidar verbunden und zur Durchführung des oben beschriebenen Verfahrens konfiguriert ist.

Ferner wird ein Kraftfahrzeug, umfassend eine solche Vorrichtung vorgeschlagen, insbesondere ein automatisiertes Fahrzeug, beispielsweise Level 3 oder höher.

Ferner wird eine Verwendung des oben beschriebenen Verfahrens oder der oben beschriebenen Vorrichtung in einem Kraftfahrzeug vorgeschlagen. Eine Verwendung für andere autonome Plattformen, wie LKWs, Busse oder Roboter, die einen LiDAR zur Navigation verwenden, ist ebenfalls möglich.

Ausführungsbeispiele der Erfindung werden im Folgenden anhand von Zeichnungen näher erläutert.

Dabei zeigen:
- Fig. 1: eine schematische Ansicht eines mittels eines Lidars erfassten Graubildes der Intensität reflektierter Laserstrahlung bei sauberem Sichtfenster,
- Fig. 2: eine schematische Ansicht eines mittels des Lidars erfassten Graubildes von Hintergrundlicht bei sauberem Sichtfenster,
- Fig. 3: eine schematische Ansicht eines mittels des Lidars erfassten Graubildes der Intensität reflektierter Laserstrahlung bei Wassertropfen auf dem Sichtfenster, und
- Fig. 4: eine schematische Ansicht eines mittels des Lidars erfassten Graubildes von Hintergrundlicht bei Wassertropfen auf dem Sichtfenster.

Einander entsprechende Teile sind in allen Figuren mit den gleichen Bezugszeichen versehen.

Die Erfindung betrifft ein Verfahren zur Detektion von Verunreinigungen auf einem Sichtfenster eines Lidars, beispielsweise einer Frontscheibe. Ein Lidar ist ein aktiver Sensor und besitzt mindestens einen Sender, beispielsweise eine oder mehrere Laser-Dioden, und mindestens einen Empfänger, beispielsweise eine oder mehrere Avalanche-Photodioden, insbesondere Einzelphotonen-Avalanche-Dioden. Beim erfindungsgemäßen Verfahren sendet der Sender einen pulsartigen Laserstrahl aus und der Empfänger detektiert Reflektionen des Laserstrahls von Objekten innerhalb eines Erfassungsbereichs. Bei geeigneten Empfängern werden neben der Distanzinformation auch noch zusätzliche Informationen wie Intensitäten der Reflektionen und Hintergrundlicht der Szene zur Verfügung gestellt. Dabei zeigen diese zusätzlichen Informationen eine unterschiedliche Sensitivität für Verschmutzungen des Sichtfensters. Das Hintergrundlicht kann beispielsweise ermittelt werden, indem vom Empfänger ein Graubild aufgenommen wird ohne dass der Sender einen Laserstrahl aussendet, beispielsweise kurz vor dem Aussenden des Laserstrahls.

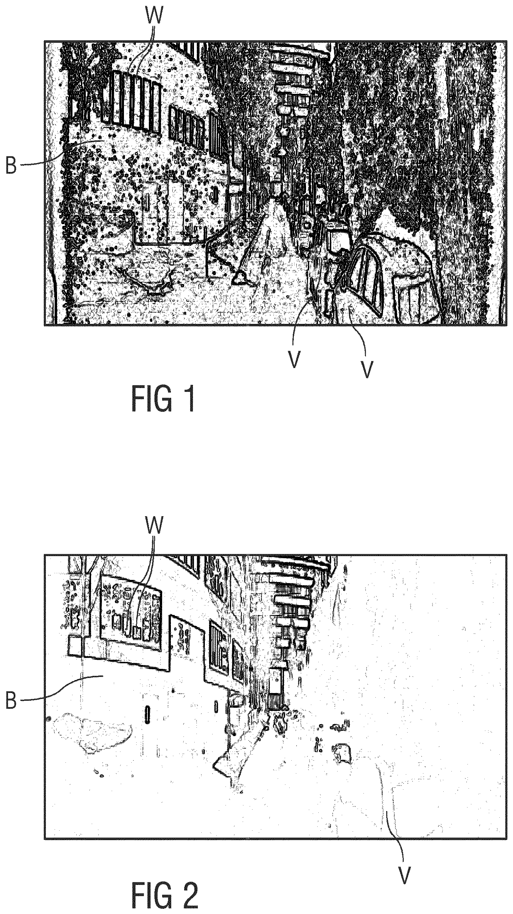

Figur 1 ist eine schematische Ansicht eines mittels eines Lidars erfassten Graubildes der Intensität reflektierter Laserstrahlung, im Folgenden Intensitätsbild genannt, bei sauberem Sichtfenster. Figur 2 ist eine schematische Ansicht eines mittels des Lidars erfassten Graubildes von Hintergrundlicht, im Folgenden Hintergrundlichtbild genannt, bei sauberem Sichtfenster. Visuell sind in beiden Abbildungen Gebäude B, Fahrzeuge V und Fenster W zu erkennen.

Für ein Lidar, das diese Zusatzinformationen bereitstellt, werden deshalb mithilfe von Verfahren der Bildverarbeitung geeignete Merkmale des Intensitätsbilds und des Hintergrundlichtbilds verglichen, beispielsweise Kanten, insbesondere Straßenmarkierungen oder Ränder von Fenstern in Wänden von Gebäuden. Mit aus dem Gebiet der Bildverarbeitung bekannten Kantendetektionsalgorithmen können Kanten aus dem Hintergrundlichtbild und dem Intensitätsbild extrahiert werden. Für die beiden resultierenden Kantenbilder werden nun Kanten-Merkmale berechnet, beispielsweise Kantenabstände, Kantenpositionen, usw. und anschließend miteinander verglichen. Mit diesem Vergleich erhält man ein Maß für die Ähnlichkeit zwischen Intensitätsbild und Hintergrundlichtbild. Wenn die Anzahl der gemeinsamen Merkmale oberhalb eines bestimmten Schwellwerts liegt, so werden die Bilder als ähnlich interpretiert und es wird darauf geschlossen, dass keine Verschmutzung vorliegt.

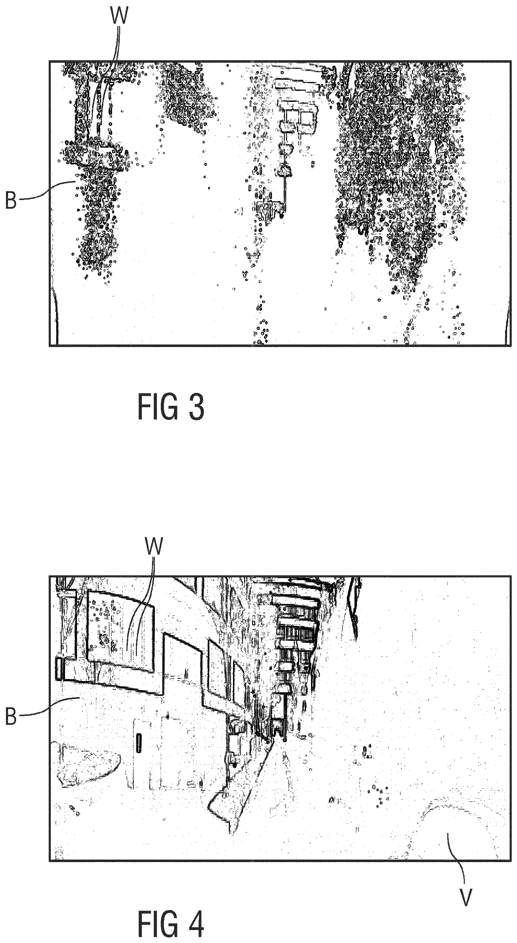

Finden sich wenige oder keine gemeinsamen Merkmale wie in den Figuren 3 und 4 gezeigt, das heißt die Anzahl der gemeinsamen Merkmale überschreitet den bestimmten Schwellwert nicht, so werden die Bilder als unähnlich interpretiert und es wird darauf geschlossen, dass eine Verschmutzung des Sichtfensters vorliegt.

Figur 3 ist eine schematische Ansicht eines mittels eines Lidars erfassten Graubildes der Intensität reflektierter Laserstrahlung, im Folgenden Intensitätsbild genannt, bei Wassertropfen auf dem Sichtfenster. Figur 4 ist eine schematische Ansicht eines mittels des Lidars erfassten Graubildes von Hintergrundlicht, im Folgenden Hintergrundlichtbild genannt, bei Wassertropfen auf dem Sichtfenster. Die im Hintergrundlichtbild in Figur 4 deutlich identifizierbaren Gebäude B, Fahrzeuge V und Fenster W sind im Intensitätsbild in Figur 3 nur schwer oder nicht zu erkennen.

Der Schwellwert kann sensor-spezifisch festgelegt werden. Das Verfahren kann für den gesamten Erfassungsbereich des Lidars oder für einen Ausschnitt zur lokalen Verschmutzungsdetektion verwendet werden.

Das vorgeschlagene Verfahren zur Verschmutzungsdetektion funktioniert möglicherweise eingeschränkt, wenn innerhalb des Sichtfeldes des Lidar-Sensors wenige oder keine Strukturen/Kanten vorhanden sind, beispielsweise bei Aufnahme einer einfarbigen Wand oder des Himmels. Beim Einsatz im Straßenverkehr sind solche Szenarien jedoch die Ausnahme. Eine Mindestanzahl der Merkmale, insbesondere Strukturen und/oder Kanten, im Sensor-Sichtfeld, die für die Verschmutzungsdetektion als erforderlich betrachtet werden, kann sensor-spezifisch festgelegt werden.

### Bezugszeichenliste

- B: Gebäude
- V: Fahrzeug
- W: Fenster

## Patentansprüche

1. Verfahren zur Detektion von Verunreinigungen auf einem Sichtfenster eines Lidars, wobei
- mittels eines Senders des Lidars ein Laserstrahl in einen Erfassungsbereich ausgesendet wird und
- mittels eines Empfängers des Lidars in dem Erfassungsbereich vorhandenes Licht detektiert wird,
- aus dem infolge des Aussendens des Laserstrahls reflektierten und detektierten Licht ein Intensitätsbild als Grauwertbild von Intensitäten von Laserreflexionen generiert wird,
- aus ohne Aussenden eines Laserstrahls detektiertem Licht ein Hintergrundlichtbild als Grauwertbild eines Hintergrundlichts generiert wird,
- das Intensitätsbild und das Hintergrundlichtbild hinsichtlich gemeinsamer Merkmale analysiert werden und
- bei Unterschreitung einer vorgegebenen Anzahl gemeinsamer Merkmale auf eine Verunreinigung auf dem Sichtfenster geschlossen wird,
**dadurch gekennzeichnet, dass**
im Intensitätsbild und im Hintergrundlichtbild Kanten mittels eines Kantendetektionsalgorithmus erkannt werden.

2. Verfahren nach Anspruch 1,
**dadurch gekennzeichnet, dass** der Laserstrahl pulsartig ausgesendet wird.

3. Verfahren nach Anspruch 1 oder 2,
**dadurch gekennzeichnet, dass** das Hintergrundlichtbild kurz vor dem Aussenden des Laserstrahls ermittelt wird.

4. Verfahren nach einem der vorhergehenden Ansprüche,
**dadurch gekennzeichnet, dass** im Intensitätsbild und im Hintergrundlichtbild Merkmale von Gebäuden (B) und/oder Fahrzeugen (V) und/oder Fenstern (W) ermittelt werden.

5. Verfahren nach Anspruch 4,
**dadurch gekennzeichnet, dass** auf Basis erkannter Kanten Kantenabstände und/oder Kantenpositionen als Merkmale ermittelt werden.

6. Vorrichtung zur Detektion von Verunreinigungen auf einem Sichtfenster eines Lidars, umfassend eine Datenverarbeitungseinheit, die mit dem Lidar verbunden und zur Durchführung des Verfahrens nach einem der Ansprüche 1 bis 5 konfiguriert ist.

7. Kraftfahrzeug, umfassend eine Vorrichtung nach Anspruch 6.

8. Kraftfahrzeug nach Anspruch 7, konfiguriert als automatisiertes Fahrzeug.

9. Verwendung des Verfahrens nach einem der Ansprüche 1 bis 5 oder der Vorrichtung nach Anspruch 6 in einem Kraftfahrzeug.

## Claims

1. Method for detecting contaminants on a viewing window of a lidar,
- a laser beam being emitted into an identification region by means of a transmitter of the lidar and
- light present in the identification region being detected by means of a receiver of the lidar,
- an intensity image being generated as a grayscale image of laser reflection intensities from the light reflected and detected as a result of the emission of the laser beam,
- a background light image being generated as a grayscale image of background light from light detected without emission of a laser beam,
- the intensity image and the background light image being analyzed with regard to common features and
- if a predetermined number of common features is not reached, it being concluded that there is contamination on the viewing window,
**characterized in that**
edges in the intensity image and in the background light image are recognized by means of an edge detection algorithm.

2. Method according to claim 1,
**characterized in that** the laser beam is emitted in pulses.

3. Method according to claim 1 or claim 2,
**characterized in that** the background light image is determined shortly before the laser beam is emitted.

4. Method according to any of the preceding claims,
**characterized in that** features of buildings (B) and/or vehicles (V) and/or windows (W) are determined in the intensity image and in the background light image.

5. Method according to claim 4,
**characterized in that** edge distances and/or edge positions are determined as features based on recognized edges.

6. Apparatus for detecting contaminants on a viewing window of a lidar, comprising a data processing unit connected to the lidar and configured to carry out the method according to any of claims 1 to 5.

7. Motor vehicle comprising an apparatus according to claim 6.

8. Motor vehicle according to claim 7, configured as an automated vehicle.

9. Use of the method according to any of claims 1 to 5 or use of the apparatus according to claim 6 in a motor vehicle.

## Revendications

1. Procédé permettant la détection d'impuretés sur une fenêtre d'observation d'un lidar, dans lequel
- un faisceau laser est émis dans une zone de détection au moyen d'un émetteur du lidar, et
- la lumière présente dans la zone de détection est détectée au moyen d'un récepteur du lidar,
- à partir de la lumière réfléchie et détectée suite à l'émission du faisceau laser, une image d'intensité est générée sous la forme d'une image en niveaux de gris d'intensités de réflexions laser,
- à partir d'une lumière détectée sans émission d'un faisceau laser, une image de lumière d'arrière-plan est générée sous la forme d'une image en niveaux de gris d'une lumière d'arrière-plan,
- l'image d'intensité et l'image de lumière d'arrière-plan sont analysées en fonction de caractéristiques communes, et
- si le nombre de caractéristiques communes est inférieur à un nombre prédéfini, on conclut à une présence d'impuretés sur la fenêtre d'observation,
**caractérisé en ce que**
dans l'image d'intensité et dans l'image de lumière d'arrière-plan, les bords sont reconnus au moyen d'un algorithme de détection de bords.

2. Procédé selon la revendication 1,
**caractérisé en ce que** le faisceau laser est émis sous forme d'impulsions.

3. Procédé selon la revendication 1 ou 2,
**caractérisé en ce que** l'image de lumière d'arrière-plan est déterminée juste avant l'émission du faisceau laser.

4. Procédé selon l'une des revendications précédentes,
**caractérisé en ce que** des caractéristiques de bâtiments (B) et/ou de véhicules (V) et/ou de fenêtres (W) sont déterminées dans l'image d'intensité et dans l'image de lumière d'arrière-plan.

5. Procédé selon la revendication 4,
**caractérisé en ce que,** sur la base des bords reconnus, des distances de bords et/ou des positions de bords sont déterminées comme caractéristiques.

6. Dispositif permettant la détection d'impuretés sur une fenêtre d'observation d'un lidar, comprenant une unité de traitement de données connectée au lidar et configurée pour mettre en œuvre le procédé selon l'une des revendications 1 à 5.

7. Véhicule automobile comprenant un dispositif selon la revendication 6.

8. Véhicule automobile selon la revendication 7, configuré comme un véhicule automatisé.

9. Utilisation du procédé selon l'une des revendications 1 à 5 ou du dispositif selon la revendication 6 dans un véhicule automobile.
